# EUROPÄISCHE PATENTSCHRIFT

(11) **EP 3 503 048 B1**
(45) Veröffentlichungstag und Bekanntmachung des Hinweises auf die Patenterteilung: **10.03.2021**
(21) Anmeldenummer: 17210084.4
(22) Anmeldetag: 22.12.2017
(51) Int. Cl.: G07D 7/12, G07D 7/121, G07D 7/20

(54) **VERFAHREN UND VORRICHTUNG ZUM PRÜFEN EINES WERTDOKUMENTS**
METHOD AND DEVICE FOR TESTING A VALUABLE DOCUMENT
PROCÉDÉ ET DISPOSITIF DESTINÉS À LA VERIFICATION D'UN DOCUMENT DE VALEUR

(43) Veröffentlichungstag der Anmeldung: 26.06.2019
(73) Patentinhaber: CI Tech Sensors AG, 3400 Burgdorf (CH)
(72) Erfinder: SCHLETTI, Reto, 3400 Burgdorf (CH); JULEN, Moritz, 3400 Burgdorf (CH); BOOS, Thomas, 3400 Burgdorf (CH)
(74) Vertreter: Viering, Jentschura & Partner mbB Patent- und Rechtsanwälte

(56) Entgegenhaltungen:
- US-A1- 2009 324 053
- US-A1- 2010 128 964

## Beschreibung

Die Erfindung betrifft ein Verfahren und eine Vorrichtung zum Prüfen eines Wertdokuments.

Es ist bekannt, ein Wertdokument, beispielsweise eine Banknote, einen Scheck, einen Identitätsnachweis, einen Reisepass, einen Fahrschein oder ein Aktiendokument, aus unterschiedlichen Gründen zu prüfen. Beispielsweise kann es notwendig sein, zu prüfen, dass das Wertdokument echt ist. Eine Vorrichtung zum Prüfen des Wertdokuments kann beispielsweise in einem Bankautomaten integriert sein oder eine eigenständige Vorrichtung sein, die beispielsweise in einer Bank oder in einem Geschäft verwendet werden kann. Neben dem Prüfen der Echtheit des Wertdokuments kann es notwendig sein, zu prüfen, in welchem Zustand sich das Wertdokument befindet. Dies wird auch "Fitnesstest" genannt. Bei dem Fitnesstest wird beispielsweise überprüft, wie stark das Wertdokument verschmutzt und/oder beschädigt ist.

Sowohl zum Prüfen der Echtheit als auch zum Prüfen der Fitness des Wertdokuments ist es bekannt, das Wertdokument abwechselnd mit Licht unterschiedlicher Farbe zu beleuchten und das von dem Wertdokument reflektierte Licht und/oder das durch das Wertdokument transmittierte Licht zu erfassen. Das auf diese Weise von dem Wertdokument aufgenommene Bild kann dann mit einem oder mehreren entsprechenden Referenzbildern verglichen werden. Bei diesem Vergleich werden insbesondere besondere Echtheitsmerkmale bzw. Fitnessmerkmale des Wertdokuments mit den entsprechenden Echtheitsmerkmalen bzw. Fitnessmerkmalen des Referenzbilds verglichen. Problematisch dabei ist, dass für den Vergleich bestimmter Echtheitsmerkmale bzw. Fitnessmerkmale das Bild des Wertdokuments eine hohe Auflösung haben sollte und ein entsprechend großer Speicherplatz für das Bild vorgehalten werden muss. Dazu kommt, dass in der Regel pro Wertdokument mehrere Echtheitsmerkmale bzw. Fitnessmerkmale geprüft werden müssen und dass sich dadurch der Bedarf an Speicherplatz vervielfacht. Außerdem wird zum Verarbeiten des bzw. der hochaufgelösten Bilder und für den Vergleich mit dem bzw. den Referenzbildern eine hohe Rechenleistung benötigt. Daher sind herkömmliche Verfahren und Vorrichtungen zum Prüfen eines Wertdokuments sehr komplex.

Die US2010/128964A1 offenbart eine Vorrichtung und ein entsprechendes Verfahren zum Prüfen von Wertdokumenten, wobei die Wertdokumente zeilenweise abgetastet werden und dabei nacheinander mit Licht unterschiedlicher Wellenlängen beleuchtet werden. Die so erhaltenen Daten werden zu interleaved Bildern mit mehreren Farbkanälen zusammengesetzt und zur Prüfung der Wertdokumente herangezogen.

Eine
Aufgabe der Erfindung ist es, ein Verfahren zum Prüfen eines Wertdokuments bereitzustellen, das einfach und/oder mittels einer einfachen Vorrichtung durchführbar ist.

Eine Aufgabe der Erfindung ist es, eine Vorrichtung zum Prüfen eines Wertdokuments bereitzustellen, die einfach ausgebildet ist.

Eine Aufgabe der Erfindung wird gelöst durch ein Verfahren zum Prüfen eines Wertdokuments, bei dem: das Wertdokument zeilenweise derart beleuchtet wird, dass eine erste Gruppe von Zeilen des Wertdokuments mit Licht einer ersten Wellenlänge beleuchtet wird und dass mindestens eine zweite Gruppe von Zeilen des Wertdokuments mit Licht einer zweiten Wellenlänge beleuchtet wird, wobei sich zumindest teilweise Zeilen der ersten Gruppe und Zeilen der zweiten Gruppe abwechseln; Reflexionslicht, das von den Zeilen reflektiert wird, und/oder Transmissionslicht, das durch die Zeilen hindurch tritt, zugeordnet zu den Zeilen der ersten Gruppe und den Zeilen der zweiten Gruppe erfasst wird, wobei erste Daten repräsentativ für das den Zeilen der ersten Gruppe zugeordnete Reflexionslicht und/oder Transmissionslicht sind und zweite Daten repräsentativ für das den Zeilen der zweiten Gruppe zugeordnete Reflexionslicht und/oder Transmissionslicht sind; die ersten Daten derart bearbeitet werden, dass ein aus den ersten Daten erzeugtes erstes Bild eine erste Punktdichte-Auflösung hat, und die zweiten Daten derart bearbeitet werden, dass ein aus den zweiten Daten erzeugtes weiteres Bild eine zweite Punktdichte-Auflösung hat, die sich von der ersten Punktdichte-Auflösung unterscheidet; und das erste Bild mit einem ersten Referenzbild verglichen wird und das weitere Bild mit einem weiteren Referenzbild verglichen wird.

Das Prüfen des Wertdokuments wird somit mit der Hilfe verschiedener Bilder des Wertdokuments durchgeführt, wobei die entsprechenden Bilder unter Beleuchtung mittels Licht entsprechend verschiedener Wellenlänge, also entsprechend verschiedener Farbe, aufgenommen werden. Für den Vergleich mit den entsprechenden Referenzbildern eignen sich besondere Merkmale des Wertdokuments, wobei für den Vergleich dieser Merkmale je ein Bild, das unter Beleuchtung mittels Licht einer bestimmten Farbe besonders geeignet ist. Beispielsweise eignet sich für den Vergleich eines ersten Merkmals besonders gut ein Bild, das unter Beleuchtung mit Licht einer ersten Farbe aufgenommen wurde, und für den Vergleich eines zweiten Merkmals eignet sich besonders gut ein Bild, das unter Beleuchtung mit Licht einer zweiten Farbe aufgenommen wurde. Ein Aspekt ist somit, dass sich zum Prüfen eines bestimmten Merkmals eine bestimmte Farbe besonders gut eignet, dass sich zum Prüfen eines anderen Merkmals eine andere Farbe besonders gut eignet und dass für jedes zu prüfende Merkmal die Farbe verwendet wird, die für das entsprechende Merkmal besonders gut geeignet ist. Beispielsweise kann ein Merkmal, aus dem hervorgeht, um welches Wertdokument es sich überhaupt handelt, beispielsweise welchen Geldwert die entsprechende Banknote hat, besonders gut unter Beleuchtung mit rotem und/oder grünem Licht erkannt werden. Im Unterschied dazu kann eine Verschmutzung, die ein Indiz für die Fitness des Wertdokuments 22 ist, besonders gut unter Beleuchtung mit blauem Licht erkannt werden.

Außerdem werden für den Vergleich der Merkmale unterschiedliche minimale Auflösungen der Bilder benötigt. Beispielsweise wird für den Vergleich des ersten Merkmals das erste Bild mit mindestens der ersten Auflösung benötigt und für den Vergleich des zweiten Merkmals wird das zweite Bild mit mindestens der zweiten Auflösung benötigt. Daher ermöglicht das Bearbeiten der Daten derart, dass die Bilder unterschiedliche Auflösungen haben, nicht jedes Bild mit der maximal möglichen Auflösung zu verarbeiten. Insbesondere ist es möglich, zum Vergleichen eines ersten Merkmals ein Bild zu verwenden, das eine niedrigere Auflösung hat, als ein Bild, das zum Vergleichen eines zweiten Merkmals verwendet wird. Beispielsweise kann zum Vergleichen aller Merkmale die jeweils minimal notwendige Auflösung verwendet werden. Ein Aspekt ist somit, dass zum Prüfen eines bestimmten Merkmals eine bestimmte minimale Auflösung nötig ist, dass zum Prüfen eines anderen Merkmals eine andere bestimmte minimale Auflösung nötig ist und dass die für jedes Bild tatsächlich verwendete Auflösung gering, vorzugsweise die entsprechende minimale Auflösung ist.

Dies trägt dazu bei, dass die Merkmale besonders einfach und präzise geprüft werden können und dass zum Verarbeiten der Bilder und für den Vergleich mit den entsprechenden Referenzbildern eine geringe Rechenleistung benötigt wird, wodurch das Verfahren zum Prüfen des Wertdokuments einfach und/oder mittels einer einfachen Vorrichtung durchführbar ist.

Die Zeilen der ersten Gruppe werden alle mit Licht der ersten Wellenlänge, also mit Licht einer ersten Farbe beleuchtet. Die Zeilen der ersten Gruppe können auch als erste Zeilen oder als Zeilen der ersten Farbe bezeichnet werden. Falls beispielsweise die erste Farbe Rot ist, so können die ersten Zeilen als rote Zeilen bezeichnet werden. Die Zeilen der zweiten Gruppe werden alle mit Licht der zweiten Wellenlänge, also mit Licht einer zweiten Farbe beleuchtet. Die Zeilen der zweiten Gruppe können auch als zweite Zeilen oder als Zeilen der zweiten Farbe bezeichnet werden. Falls beispielsweise die zweite Farbe Grün ist, so können die zweiten Zeilen als grüne Zeilen bezeichnet werden. Zusätzlich kann das Wertdokument mit Licht weiterer Wellenlängen beleuchtet werden, so dass weitere Gruppen von Zeilen erzeugt werden.

Für den Vergleich der Bilder mit den Referenzbildern werden vor allem bestimmte Merkmale des Wertdokuments herangezogen. Diese Merkmale können beispielsweise Echtheitsmerkmale zum Prüfen der Echtheit eines Wertdokuments oder Fitnessmerkmale zum Prüfen der Fitness eines Wertdokuments sein. Echtheitsmerkmale können beispielsweise Wasserzeichen, reflektierende Bereiche und/oder unter entsprechender Beleuchtung leuchtende Bereiche sein. Ein Fitnessmerkmal kann beispielsweise eine Verschmutzung des Wertdokuments sein.

Gemäß einer Weiterbildung zeigt das erste Bild eine erste Anzahl von Zeilen der ersten Gruppe, wobei die ersten Daten zusätzlich so bearbeitet werden, dass mindestens ein aus den ersten Daten erzeugtes zweites Bild eine geringere Anzahl von Zeilen der ersten Gruppe zeigt und eine Punktdichte-Auflösung hat, die entsprechend geringer als die erste Punktdichte-Auflösung ist, und wobei das zweite Bild mit einem entsprechenden zweiten Referenzbild verglichen wird. Dies ermöglicht zum einen anhand der Zeilen der ersten Gruppe zwei verschiedene Bilder zu erzeugen, die für den Vergleich von entsprechend zwei verschiedenen Merkmalen verwendet werden können, und zum anderen für diese beiden Vergleiche jeweils nur Bilder mit einer geringen, beispielsweise der minimal notwendigen Zeilenanzahl zu verwenden. Dies trägt weiter dazu bei, dass zum Verarbeiten der Bilder und für den Vergleich mit den entsprechenden Referenzbildern eine noch geringe Rechenleistung benötigt wird, wodurch das Verfahren zum Prüfen des Wertdokuments noch einfacher und/oder mittels einer noch einfacheren Vorrichtung durchführbar ist.

Gemäß einer Weiterbildung werden die ersten Daten zusätzlich so bearbeitet, dass zumindest teilweise erste Daten aufeinander folgender Zeilen der ersten Gruppe gemittelt werden und dass mindestens ein aus diesen gemittelten Daten erzeugtes zweites Bild eine Punktdichte-Auflösung hat, die geringer als die erste Punktdichte-Auflösung ist, wobei das zweite Bild mit einem entsprechenden zweiten Referenzbild verglichen wird. Dies ermöglicht zum einen anhand der Zeilen der ersten Gruppe zwei verschiedene Bilder zu erzeugen, die für den Vergleich von entsprechend zwei verschiedenen Merkmalen verwendet werden können, und zum anderen für diese beiden Vergleiche jeweils nur Bilder mit einer geringen, beispielsweise der minimal notwendigen Punktdichte-Auflösung zu verwenden. Dies trägt weiter dazu bei, dass zum Verarbeiten der Bilder und für den Vergleich mit den entsprechenden Referenzbildern eine noch geringere Rechenleistung benötigt wird, wodurch das Verfahren zum Prüfen des Wertdokuments noch einfacher und/oder mittels einer noch einfacheren Vorrichtung durchführbar ist.

Die beiden im Vorhergehenden erläuterten Weiterbildungen können auch miteinander kombiniert werden. Insbesondere können die ersten Daten zusätzlich so bearbeitet werden, dass das aus den ersten Daten erzeugte zweite Bild eine geringere Anzahl von Zeilen der ersten Gruppe zeigt als das erste Bild und dass für das zweite Bild zumindest teilweise erste Daten aufeinander folgender Zeilen der ersten Gruppe gemittelt werden, so dass das entsprechende zweite Bild eine Punktdichte- Auflösung hat, die geringer als die erste Punktdichte-Auflösung ist.

Gemäß einer Weiterbildung wird das Wertdokument in einer Bewegungsrichtung relativ zu einer Beleuchtungseinheit, mittels der das Wertdokument beleuchtet wird, bewegt und das Wertdokument wird derart beleuchtet, dass die Zeilen senkrecht zu der Bewegungsrichtung ausgerichtet sind. Dies ermöglicht auf einfache Weise, mit fortschreitender Bewegung nach und nach das gesamte Wertdokument zu beleuchten.

Gemäß einer Weiterbildung entspricht die erste Punktdichte-Auflösung oder die zweite Punktdichte- Auflösung einer nativen Punktdichte- Auflösung eines Detektors zum Erfassen des Reflexionslichts und/oder Transmissionslichts. Die native Punktdichte-Auflösung entspricht exakt der physikalischen digitalen Auflösung, also der Pixelzahl, des Detektors. Der Detektor ist beispielsweise ein Zeilendetektor und weist dementsprechend lediglich eine Zeile von Pixeln auf. Eine Sensoreinheit, in der der Detektor angeordnet ist kann auch als Kamera bezeichnet werden.

Gemäß einer Weiterbildung ist das Wertdokument eine Banknote, ein Scheck, ein Identitätsnachweis, ein Reisepass, ein Fahrschein oder ein Aktiendokument.

Eine Aufgabe der Erfindung wird gelöst durch eine Vorrichtung zur Echtheitsprüfung des Wertdokuments, aufweisend: eine Beleuchtungseinheit zum zeilenweisen Beleuchten des Wertdokuments derart, dass die erste Gruppe von Zeilen des Wertdokuments mit Licht der ersten Wellenlänge beleuchtet wird und dass mindestens die zweite Gruppe von Zeilen des Wertdokuments mit Licht der zweiten Wellenlänge beleuchtet wird, wobei sich zumindest teilweise Zeilen der ersten Gruppe und Zeilen der zweiten Gruppe abwechseln; den Detektor zum Erfassen von Reflexionslicht, das von den Zeilen reflektiert wird, und/oder von Transmissionslicht, das durch die Zeilen hindurch tritt, zugeordnet zu den Zeilen der ersten Gruppe und den Zeilen der zweiten Gruppe, wobei die ersten Daten repräsentativ für das den Zeilen der ersten Gruppe zugeordnete Reflexionslicht und/oder Transmissionslicht sind und die zweiten Daten repräsentativ für das den Zeilen der zweiten Gruppe zugeordnete Reflexionslicht und/oder Transmissionslicht sind; eine Datenbearbeitungseinheit zum Bearbeiten der ersten Daten derart, dass das aus den ersten Daten erzeugte erste Bild eine erste Punktdichte- Auflösung hat, und zum Bearbeiten der zweiten Daten derart, dass das aus den zweiten Daten erzeugte zweite Bild eine zweite Punktdichte- Auflösung hat, die sich von der ersten Auflösung unterscheidet; und eine Auswerteeinheit, die das erste Bild mit dem ersten Referenzbild und das zweite Bild mit dem zweiten Referenzbild vergleicht.

Die im Vorhergehenden im Zusammenhang mit dem Verfahren zum Prüfen des Wertdokuments erläuterten Wirkungen, Vorteile und Weiterbildungen können ohne weiteres auf die Vorrichtung zum Prüfen des Wertdokuments übertragen werden. Daher wird an dieser Stelle auf eine erneute Darstellung dieser Auswirkungen, Vorteile und Weiterbildungen verzichtet und lediglich auf die vorhergehenden Ausführungen verwiesen.

Gemäß einer Weiterbildung zeigt das erste Bild die erste Anzahl von Zeilen der ersten Gruppe und die Datenverarbeitungseinheit bearbeitet die ersten Daten zusätzlich so, dass mindestens das aus den ersten Daten erzeugte zweite Bild die geringere Anzahl von Zeilen der ersten Gruppe zeigt und die Punktdichte-Auflösung hat, die entsprechend geringer als die erste Punktdichte-Auflösung ist, und die Auswerteeinheit vergleicht das zweite Bild mit dem entsprechenden zweiten Referenzbild. Gemäß einer Weiterbildung bearbeitet die Datenverarbeitungseinheit die ersten Daten zusätzlich so, dass zumindest teilweise erste Daten aufeinander folgender Zeilen der ersten Gruppe gemittelt werden und dass mindestens ein aus diesen gemittelten Daten erzeugtes zweites Bild eine Punktdichte-Auflösung hat, die geringer als die erste Auflösung ist, und die Auswerteeinheit vergleicht das zweite Bild mit einem entsprechenden zweiten Referenzbild.

Die beiden im Vorhergehenden erläuterten Weiterbildungen können auch miteinander kombiniert werden. Insbesondere können die ersten Daten zusätzlich so bearbeitet werden, dass das aus den ersten Daten erzeugte zweite Bild eine geringere Anzahl von Zeilen der ersten Gruppe zeigt als das erste Bild und dass für das zweite Bild zumindest teilweise erste Daten aufeinander folgender Zeilen der ersten Gruppe gemittelt werden, so dass das entsprechende zweite Bild eine Punktdichte- Auflösung hat, die geringer als die erste Auflösung ist.

Gemäß einer Weiterbildung weist die Vorrichtung eine Transporteinheit auf, mittels der das Wertdokument in einer Bewegungsrichtung relativ zu der Beleuchtungseinheit bewegt wird, wobei das Wertdokument derart bewegt und beleuchtet wird, dass die Zeilen senkrecht zu der Bewegungsrichtung ausgerichtet sind.

Gemäß einer Weiterbildung entspricht die erste Punktdichte-Auflösung oder die zweite Punktdichte-Auflösung einer nativen Auflösung der Kamera zum Erfassen des Reflexionslichts und/oder Transmissionslichts. Gemäß einer Weiterbildung ist das Wertdokument eine Banknote, ein Scheck, ein Identitätsnachweis, ein Reisepass, ein Fahrschein oder ein Aktiendokument.

Ausführungsbeispiele der Erfindung sind in den Figuren dargestellt und werden im Folgenden näher erläutert.

Es zeigen:
- Figur 1: eine perspektivische Darstellung eines Ausführungsbeispiels einer Vorrichtung zum Prüfen eines Wertdokuments mit reflektiver Beleuchtung;
- Figur 2: eine seitliche schematische Darstellung der Vorrichtung zum Prüfen eines Wertdokuments mit reflektiver Beleuchtung gemäß Figur 1;
- Figur 3: eine perspektivische Darstellung eines Ausführungsbeispiels einer Vorrichtung zum Prüfen eines Wertdokuments mit transmissiver Beleuchtung;
- Figur 4: eine seitliche schematische Darstellung der Vorrichtung zum Prüfen eines Wertdokuments mit transmissiver Beleuchtung gemäß Figur 2;
- Figur 5: eine schematische Darstellung eines Ausführungsbeispiels einer Zeile von Pixeln eines Detektors;
- Figur 6: eine schematische Darstellung der Zeile von Pixeln des Detektors gemäß Figur 5 unter verschiedenen Beleuchtungen;
- Figur 7: eine schematische Darstellung eines Beispiels eines Wertdokuments unter verschiedenen Beleuchtungen;
- Figur 8: eine Veranschaulichung der Zeile von Pixeln des Detektors beim Erfassen des Lichts von dem Wertdokument gemäß Figur 7;
- Figur 9: eine Veranschaulichung von bearbeiteten Daten erzeugt mittels der Zeilen von Pixeln des Detektors beim Erfassen des Lichts von dem Wertdokument gemäß Figur 7;
- Figur 10: Bilder die mittels der bearbeiteten Daten gemäß Figur 9 erzeugt werden;
- Figur 11: eine Veranschaulichung einer Erzeugung unterschiedlicher Bilder anhand von unterschiedlich bearbeiteten Daten unter Verwendung reflektiver Beleuchtung;
- Figur 12: eine Veranschaulichung einer Erzeugung unterschiedlicher Bilder anhand von unterschiedlich bearbeiteten Daten unter Verwendung transmissiver Beleuchtung;
- Figur 13: eine Veranschaulichung einer Erzeugung unterschiedlicher Bilder anhand von unterschiedlich bearbeiteten Daten unter Verwendung gemischter reflektiver und transmissiver Beleuchtung;
- Figur 14: ein Ablaufdiagramm eines Ausführungsbeispiels eines Verfahrens zum Prüfen eines Wertdokuments.

In der folgenden ausführlichen Beschreibung wird auf die beigefügten Zeichnungen Bezug genommen, die Teil dieser Beschreibung bilden und in denen zur Veranschaulichung spezifische Ausführungsbeispiele gezeigt sind, in denen die Erfindung ausgeübt werden kann. Da Komponenten von Ausführungsbeispielen in einer Anzahl verschiedener Orientierungen positioniert werden können, dient die Richtungsterminologie zur Veranschaulichung und ist auf keinerlei Weise einschränkend. Es versteht sich, dass die Merkmale der hierin beschriebenen verschiedenen Ausführungsbeispiele miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert. In den Figuren sind identische oder ähnliche Elemente mit identischen Bezugszeichen versehen, soweit dies zweckmäßig ist Im folgenden ist die Auflösung eines Bildes als Punktdichte-Auflösung zu verstehen.

Wertdokumente wie Wertscheine oder bspw. Banknoten, Schecks, Aktien, Papiere mit Sicherheitsaufdruck, Urkunden, Ausweise, Reisepässe, Eintrittskarten, Fahrkarten, Gutscheine, Identifikations- oder Zugangskarten oder ähnliches können auf deren Frontseite, deren Rückseite und/oder im Material eingebettet mit Sicherheitsmerkmalen versehen sein, um eine Fälschung davon zu erschweren oder zu verhindern sowie deren Echtheit überprüfen zu können. Im Falle von bspw. einer Banknote kann eine Art von Sicherheitsmerkmalen ein mit lumineszierender (z.B. phosphor- und/oder fluoreszierender) Tinte bedruckter Bereich sein. Da sich die Lumineszenz, das Reflexions- und/oder Transmissionsverhalten eines derartigen Bereichs der Banknote nur unter hohem Aufwand nachahmen lassen, stellt dies ein wirksames Sicherheitsmerkmal dar, welches zugleich maschinenprüfbar ist.

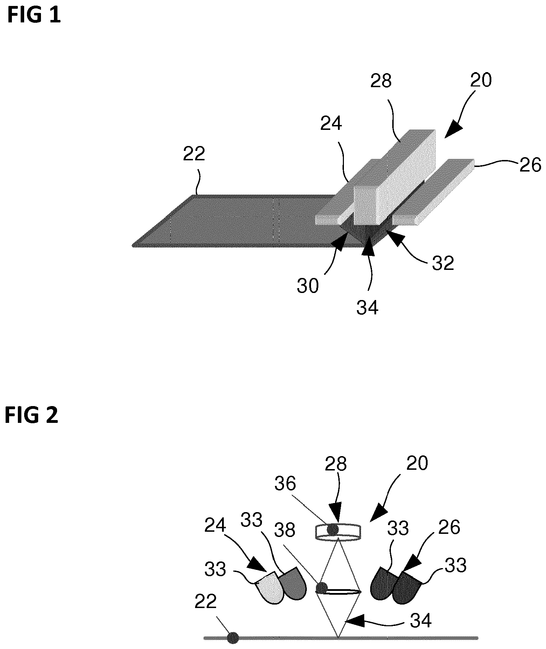

**Fig. 1** zeigt eine perspektivische Darstellung eines Ausführungsbeispiels einer Vorrichtung 20 zum Prüfen eines Wertdokuments 22. Die Vorrichtung 20 eignet sich insbesondere zum Prüfen einer Echtheit und/oder eines Zustands, der sogenannten Fitness, des Wertdokuments 22.

Die Vorrichtung 20 weist eine erste Beleuchtungseinheit 24 auf. Die erste Beleuchtungseinheit 24 dient zum Beleuchten des Wertdokuments 22 unter einem ersten Winkel. Optional weist die erste Vorrichtung 20 eine zweite Beleuchtungseinheit 26 auf. Die zweite Beleuchtungseinheit 26 dient zum Beleuchten des Wertdokuments 22 unter einem zweiten Winkel. Mittels der Beleuchtungseinheiten 24, 26 kann das Wertdokument 22 im Auflicht beleuchtet werden.

Das in Figur 1 gezeigte Wertdokument 22 hat zwei Längsseiten, die sich in Figur 1 von links nach rechts erstrecken, und zwei Querseiten, die senkrecht zu den Längsseiten angeordnet sind, die kürzer als die Längsseiten sind und die sich in Figur 1 in die Zeichenebene hinein erstrecken. Auch die Beleuchtungseinheiten 24, 26 und die Sensoreinheit 28 sind bei dem in Figur 1 dargestellten Ausführungsbeispiel länglich ausgebildet, wobei sich deren Längsseiten senkrecht zu den Längsseiten des Wertdokuments 22 erstrecken. Anschaulich gesprochen ist die Vorrichtung 20 senkrecht zu dem Wertdokument 22 ausgerichtet. Diese kurze Abhandlung über die äußeren Formen und Ausrichtungen des Wertdokuments 22 und der Vorrichtung 20 dienen lediglich dazu, um im Folgenden einzelne Merkmale und dessen räumliche Anordnung präzise beschreiben zu können. Bei anderen Ausführungsformen können das Wertdokument 22 und/oder die Vorrichtung 20 anders ausgebildet und/oder anders zueinander angeordnet sein.

Die Vorrichtung 20 weist weiter eine Sensoreinheit 28 auf. Die Sensoreinheit 28 dient zum Erfassen von Licht, beispielsweise Reflexionslicht, das infolge des Beleuchtens des Wertdokuments 22 von dem Wertdokument 22 reflektiert wird.

Des Weiteren weist die Vorrichtung 20 eine in Figur 1 nicht dargestellte Transporteinheit auf, mittels der das Wertdokument 22 relativ zu der Vorrichtung 20 bewegt werden kann. Beispielsweise bewegt die Transporteinheit das Wertdokument 22, während die Vorrichtung 20 ortsfest bleibt. Alternativ dazu kann das Wertdokument 22 ortsfest bleiben, während die Vorrichtung 20 sich mittels der Transporteinheit bewegt. In beiden Fällen wird das Wertdokument 22 derart relativ zu der Vorrichtung 20 bewegt, dass im Zuge der Bewegung das gesamte Wertdokument beleuchtet wird.

**Fig. 2** zeigt eine seitliche schematische Darstellung der Vorrichtung 20 zum Prüfen des Wertdokuments 22 gemäß Figur 1. Aus Figur 2 ist ersichtlich, dass die Beleuchtungseinheiten 24, 26 jeweils mindestens eine, vorzugsweise mehrere Lichtquellen 33 aufweisen. Beispielsweise weisen die Beleuchtungseinheiten 24, 26 jeweils mindestens eine, beispielsweise zwei Zeilen von je mehreren Lichtquellen 33 auf. Gegebenenfalls können die zwei Zeilen von Lichtquellen 33 einer der Beleuchtungseinheiten 24, 26 zueinander parallel sein. Alternativ oder zusätzlich können eine oder beide Zeilen von Lichtquellen 33 parallel zu der Längsseite der entsprechenden Beleuchtungseinheit 24, 26 sein. Alternativ oder zusätzlich können eine oder beide Zeilen von Lichtquellen 33 einer der Beleuchtungseinheiten 24, 26 senkrecht zu der Längsrichtung des Wertdokuments 22 angeordnet sein. Bei dem in Figur 2 gezeigten Ausführungsbeispiel erstrecken sich die Zeilen von Lichtquellen 33 in die Zeichenebene hinein, so dass die in Figur 2 gezeigten Lichtquellen 33 jeweils repräsentativ für eine dieser Zeilen von Lichtquellen 33 sind. Die Lichtquellen 33 können beispielsweise jeweils eine, zwei oder mehr Leuchtdioden aufweisen.

Die Sensoreinheit 28 weist einen Detektor 36 und ein optisches Element 38 auf. Der Detektor 36 ist ein Zeilendetektor, der mehrere in Figur 2 nicht gezeigte Pixel aufweist. Die Pixel sind entlang einer Zeile angeordnet, wobei sich die entsprechende Zeile bei dem in Figur 2 gezeigten Ausführungsbeispiel in die Zeichenebene hinein erstreckt. Das optische Element 38 kann beispielsweise eine Fokussierlinse aufweisen, die das von dem Wertdokument 22 kommende Licht, beispielsweise das Reflexionslicht, bündelt und auf den Detektor 36 richtet. Das optische Element 38 kann beispielsweise extrudiert sein und sich parallel zu dem Detektor 36 in die Zeichenebene hinein erstrecken. Alternativ dazu kann das optische Element 38 mehrere Fokussierlinsen aufweisen, die parallel zu den Pixeln des Detektors 36 entlang einer Zeile angeordnet sind. Beispielsweise kann jedem Pixel genau ein optisches Element 38 zugeordnet sein, das das von dem Wertdokument 22 kommende Licht auf den entsprechenden Pixel richtet. Die Zeile von Pixeln des Detektors 36, die Zeile von Fokussierlinsen und/oder gegebenenfalls das extrudierte optische Element 38 können beispielsweise parallel zu der Längsrichtung der Sensoreinheit 28 und/oder senkrecht zu der Längsrichtung des Wertdokuments 22 angeordnet sein.

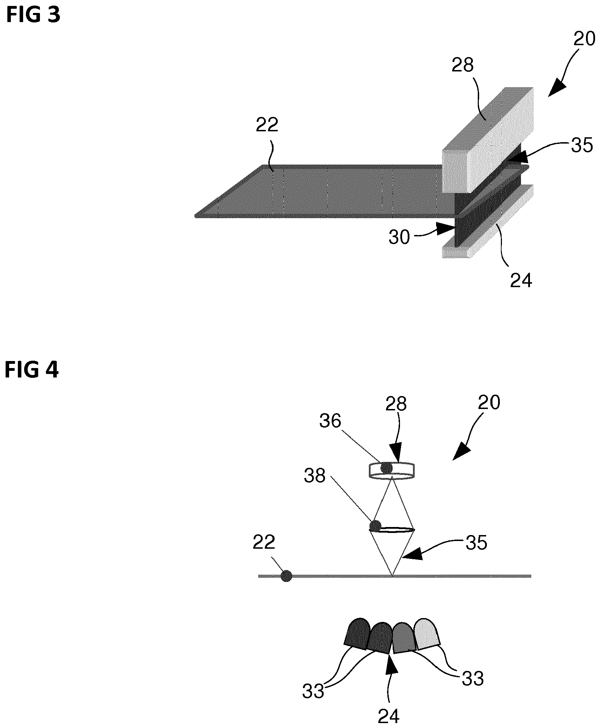

**Fig. 3** zeigt eine perspektivische Darstellung eines Ausführungsbeispiels einer Vorrichtung 20 zum Prüfen eines Wertdokuments. Die Vorrichtung 20 zum Prüfen des Wertdokuments 22 kann beispielsweise weitgehend der im Vorhergehenden erläuterten Vorrichtung 20 zum Prüfen des Wertdokuments 22 entsprechen. Bei dem in Figur 3 gezeigten Ausführungsbeispiel ist lediglich eine Beleuchtungseinheit 24 auf einer von der Sensoreinheit 28 abgewandten Seite des Wertdokuments 22 angeordnet. Die Beleuchtungseinheit 24 beleuchtet das Wertdokument 22 mittels des Beleuchtungslichts 30. Zumindest ein Teil des Beleuchtungslichts 30 tritt durch das Wertdokument 22 hindurch und das entsprechende Transmissionslicht 35 trifft auf den Detektor 36 der Sensoreinheit 28. Mittels der Beleuchtungseinheit 24 kann das Wertdokument 22 im Durchlicht beleuchtet werden.

**Fig. 4** zeigt eine seitliche schematische Darstellung der Vorrichtung 20 zum Prüfen des Wertdokuments 22 gemäß Figur 3. Aus Figur 4 ist ersichtlich, dass die erste Beleuchtungseinheit 24 bei diesem Ausführungsbeispiel mindestens vier Lichtquellen 33 aufweist. Bei einem anderen Ausführungsbeispiel kann die erste Beleuchtungseinheiten 24 jedoch auch mehr oder weniger Lichtquellen 33 aufweisen. Die vier Lichtquellen 33 können jeweils repräsentativ für eine Zeile von Lichtquellen 33 sein, wobei sich die entsprechenden Zeilen in die Zeilenebene hinein erstrecken. Beispielsweise sind die Zeilen von Lichtquellen 33 parallel zu einer Längsrichtung der ersten Beleuchtungseinheit 24 und/oder senkrecht zu einer Längsrichtung des Wertdokuments 22 angeordnet.

Die mit Bezug zu den Figuren 1 bis 4 erläuterten Vorrichtungen 20 zum Prüfen des Wertdokuments 22 weisen zusätzlich zu den im Vorherstehenden erläuterten Komponenten jeweils eine Steuereinheit, eine Datenbearbeitungseinheit und eine Auswerteeinheit auf. Die Steuereinheit ist mit den Beleuchtungseinheiten 24, 26, der Sensoreinheit 28, der Datenbearbeitungseinheit und der Auswerteeinheit derart gekoppelt, dass sie diese steuern kann und insbesondere Signale an diese schicken kann und/oder Signale von diesen empfangen kann. Die Datenbearbeitungseinheit und die Auswerteeinheit können auch Teile der Steuereinheit sein.

Die Datenbearbeitungseinheit ist mit der Sensoreinheit 28 derart gekoppelt, dass sie Daten von der Sensoreinheit 28 empfangen kann. Die Daten sind repräsentativ für das mittels der Sensoreinheit 28 erfasste Licht. Die Datenbearbeitungseinheit weist mindestens einen, vorzugsweise zwei oder mehr Auflösungsreduzierer auf, mittels derer die Daten derart bearbeitet werden können, dass ein aus den Daten erzeugtes Bild des Wertdokuments 22 eine geringere Auflösung hat, als ein aus den Daten erzeugtes Bild des Wertdokuments 22, das nicht mittels des bzw. der Auflösungsreduzierer bearbeitet wurde.

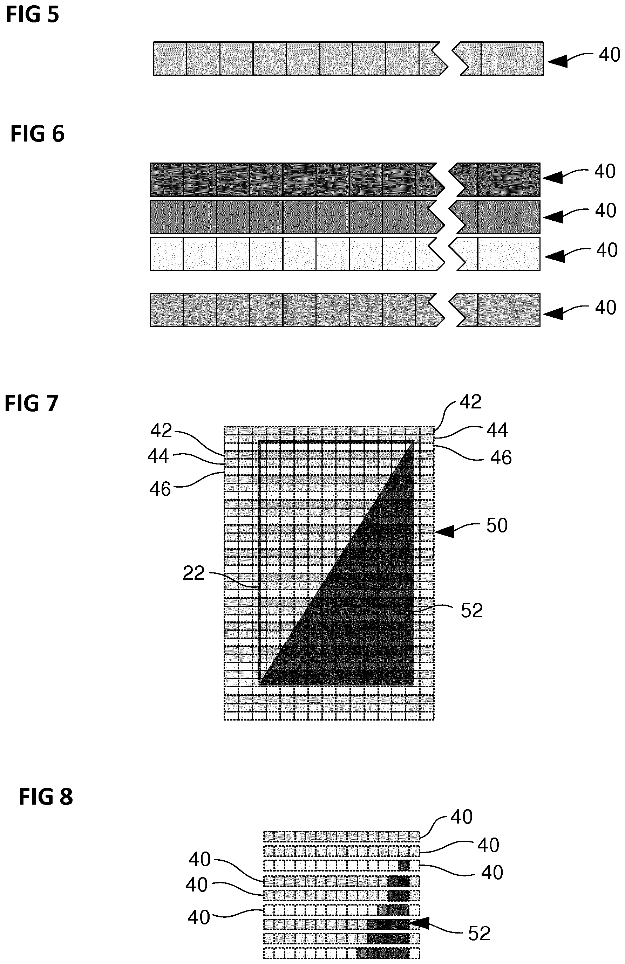

**Fig. 5** zeigt eine schematische Darstellung eines Ausführungsbeispiels einer Zeile von Pixeln eines Detektors, beispielsweise des im Vorhergehenden erläuterten Detektors 36 der Sensoreinheit 28. Die Pixel sind zeilenförmig nebeneinander angeordnet. Die Zeile von Pixeln wird nachfolgend auch als Detektorzeile 40 bezeichnet.

**Fig. 6** zeigt eine schematische Darstellung der Zeile von Pixeln des Detektors 36 gemäß Figur 5 unter verschiedenen Beleuchtungen, wobei die Beleuchtung des Detektors 36 nicht direkt, sondern indirekt über das Wertdokument 22 erfolgt. Insbesondere wird der Detektor 36 mittels des von dem Wertdokument 22 reflektierten Lichts oder mittels des durch das Wertdokument 22 transmittierten Lichts beleuchtet. Figur 6 zeigt nicht mehrere Detektorzeilen 40 zum selben Zeitpunkt, sondern dieselbe Detektorzeile 40 zu verschiedenen Zeitpunkten. Insbesondere zeigt Figur 6 untereinander die Detektorzeile 40 einmal unter Beleuchtung mit Licht einer ersten Wellenlänge, beispielsweise mit rotem Licht, einmal unter Beleuchtung mit Licht einer zweiten Wellenlänge, beispielsweise mit grünem Licht, einmal unter Beleuchtung mit Licht einer dritten Wellenlänge, beispielsweise gelbem Licht, und einmal unter Beleuchtung mit Licht einer vierten Wellenlänge, beispielsweise blauem Licht oder Infrarotlicht.

**Fig. 7** zeigt eine schematische Darstellung eines Beispiels eines Wertdokuments unter verschiedenen Beleuchtungen, beispielsweise des im Vorhergehenden erläuterten Wertdokuments 22 unter einer periodisch wechselnden Beleuchtung gemäß den in Figur 6 gezeigten drei oberen Detektorzeilen 42. Insbesondere wird das Wertdokument 22 während es relativ zu der Vorrichtung 20 zum Prüfen des Wertdokuments 22 bewegt wird abwechselnd mit rotem Licht, grünem Licht und gelbem Licht beleuchtet, wobei dieser Vorgang wiederholt wird, bis das gesamte Wertdokument 22 beleuchtet wurde. Betrachtet man das Wertdokument 22 während dieses Vorgangs, so bilden sich auf dem Wertdokument 22 nacheinander Zeilen verschiedener Farben, was in Figur 7 schematisch veranschaulicht ist. Insbesondere zeigt Figur 7 untereinander die Zeilen 42, 44, 46 des Wertdokuments 22, insbesondere erste Zeilen 42 unter Beleuchtung mit Licht einer ersten Wellenlänge, beispielsweise mit rotem Licht, darunter zweite Zeilen 44 unter Beleuchtung mit Licht einer zweiten Wellenlänge, beispielsweise mit grünem Licht, und dritte Zeilen 46 unter Beleuchtung mit Licht einer dritten Wellenlänge, beispielsweise gelbem Licht. Diese Reihenfolge der Zeilen 42, 44, 46 wiederholt sich, bis das Wertdokument 22 vollständig beleuchtet wurde.

Die ersten Zeilen 42 bilden eine erste Gruppe von den Zeilen 42, 44, 46, die zweiten Zeilen 44 bilden eine zweite Gruppe von den Zeilen 42, 44, 46 und die dritten Zeilen 46 bilden eine dritte Gruppe von den Zeilen 42, 44, 46. Die ersten Zeilen 42 können auch als rote Zeilen bezeichnet werden. Die zweiten Zeilen 44 können auch als grüne Zeilen bezeichnet werden. Die dritten Zeilen 46 können auch als gelbe Zeilen bezeichnet werden. Dabei ist zu verstehen, dass die Zeilen 42, 44, 46 des Wertdokuments 22 in Wirklichkeit nicht gleichzeitig, sondern nacheinander beleuchtet werden. Die schematische Darstellung in Figur 7 zeigt somit kein reales Bild des Wertdokuments 22 unter verschiedenen Beleuchtungen, sondern stellt eine Veranschaulichung des zeitlichen Ablaufs der Beleuchtung des Wertdokuments 22 dar.

Außerdem zeigt Figur 7, dass das Wertdokument 22 Erkennungsmerkmale 52 aufweist, die in Figur 7 zur besseren Erläuterung mittels eines großen Dreiecks schematisch veranschaulicht sind.

**Fig. 8** zeigt eine Veranschaulichung der Zeile von Pixeln des Detektors 36 beim Erfassen des Lichts von dem Wertdokument gemäß Figur 7. Insbesondere zeigt Figur 8 untereinander mehrmals die Detektorzeile 40 unter der Beleuchtung gemäß den Figuren 6 und 7. Dabei ist ersichtlich, dass bei den oberen beiden Detektorzeilen in Figur 8 das Erkennungsmerkmal 52 noch nicht erkennbar ist, jedoch der dreieckigen Struktur des Erkennungsmerkmals 52 entsprechend in den darunterliegenden Detektorzeilen 40 von einer zunehmenden Pixelzahl erfasst wird. Ähnlich wie Figur 6 zeigt Figur 8 nicht mehrere Detektorzeilen 40 zum selben Zeitpunkt, sondern dieselbe Detektorzeile 40 zu verschiedenen Zeitpunkten.

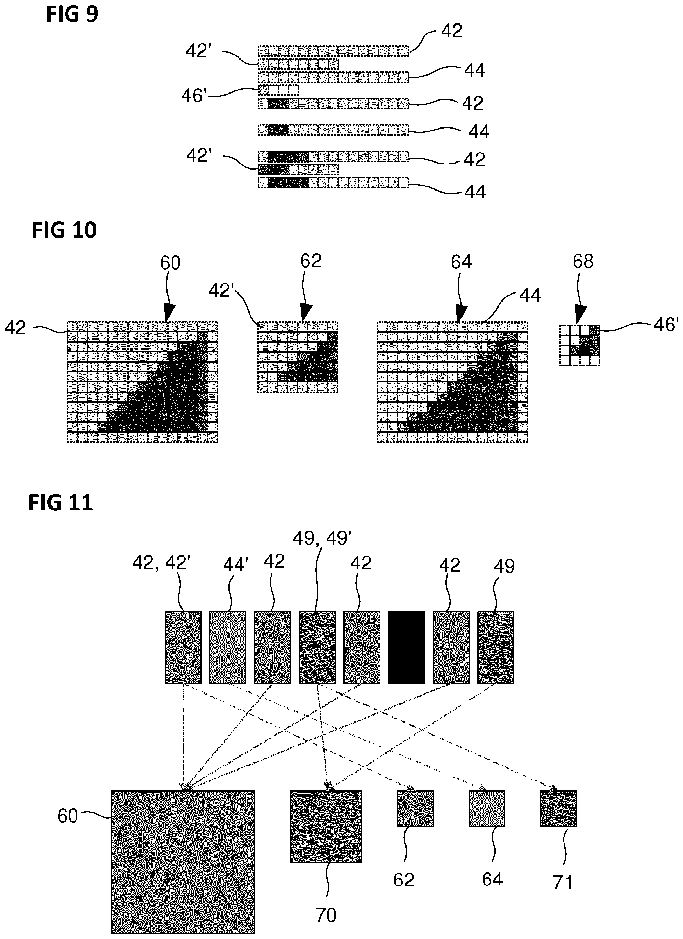

**Fig. 9** zeigt eine Veranschaulichung von bearbeiteten Daten anhand der Zeilen 42, 44, 46 des Wertdokuments 22 gemäß Figur 7. Insbesondere zeigt Figur 9 abwechselnd untereinander die ersten Zeilen 42, reduzierte erste Zeilen 42', die zweiten Zeilen 44 und eine reduzierte dritte Zeile 46'. Die reduzierten ersten Zeilen 42' werden erzeugt durch Reduzierung der Auflösung der ersten Zeilen 42. Die reduzierte dritte Zeile 46' wird erzeugt mittels Reduzierung der Auflösung der Aufnahme der entsprechenden dritten Zeile 46, beispielsweise der in Figur 8 gezeigten ersten dritten Zeile 46 von oben. Allgemein gesprochen können anhand der Daten, die die Zeilen 42, 44, 46 repräsentieren, Daten gewonnen werden, die entsprechende reduzierte Zeilen repräsentieren, insbesondere mittels eines oder mehrerer Auflösungsreduzierer.

**Fig. 10** zeigt Bilder 60, 62, 64, 68, die beispielsweise mittels der bearbeiteten Daten gemäß Figur 9 erzeugt werden können.

Insbesondere kann mittels der Daten, die die ersten Zeilen 42 repräsentieren, ein erstes Bild 60 mit einer ersten Auflösung erzeugt werden. Die erste Auflösung entspricht beispielsweise einer nativen Auflösung des Detektors 36.

Mittels der Daten, die die reduzierten ersten Zeilen 42' repräsentieren, kann ein zweites Bild 62 mit einer zweiten Auflösung erzeugt werden. Die zweite Auflösung ist geringer als die erste Auflösung.

Mittels der Daten, die die zweiten Zeilen 44 repräsentieren, kann ein drittes Bild 64 mit einer dritten Auflösung erzeugt werden, wobei bei diesem Ausführungsbeispiel die dritte Auflösung gleich der ersten Auflösung ist.

Mittels der Daten, die die dritten Zeilen 46 repräsentieren, kann ein viertes Bild 68 mit einer vierten Auflösung erzeugt werden, wobei bei diesem Ausführungsbeispiel die vierte Auflösung kleiner als die erste, die zweite und die dritte Auflösung ist.

Somit können mittels der Beleuchtungseinheiten 24, 26 und der einen Detektorzeile 40 mehrere Bilder 60, 62, 64, 68 des Wertdokuments 22 erzeugt werden, wobei die Bilder 60, 62, 64, 68 jeweils mittels Licht einer einzigen Farbe erzeugt werden, jedoch insgesamt zumindest teilweise mittels Licht verschiedener Farben erzeugt werden und zumindest teilweise verschiedene Auflösungen haben.

Alle Bilder 60, 62, 64, 68 zeigen zur einfachen Veranschaulichung das Erkennungsmerkmal 52 in der entsprechenden Auflösung. In der Realität weisen Wertdokumente 22 jedoch häufig verschiedene Erkennungsmerkmale 52 auf. Das Beleuchtungsschema und die Auflösungen der Bilder 60, 62, 64, 68 können abhängig von dem zu prüfenden Wertdokument 22 derart gewählt werden, dass sie besonders günstig, beispielsweise optimal, zum Erkennen des entsprechenden Erkennungsmerkmals 52 sind. Beispielsweise ist zum Erkennen eines ersten Erkennungsmerkmals eine geringere Auflösung nötig als zum Erkennen eines zweiten Merkmals. Wird zum Erkennen des Erkennungsmerkmals dann tatsächlich die geringe Auflösung verwendet, so kann auf diese Weise die Datenverarbeitung besonders schnell und besonders einfach und somit mit besonders geringer Rechenleistung erfolgen. Alternativ oder zusätzlich kann es zum Erkennen eines zweiten Erkennungsmerkmals ausreichend sein, lediglich einen Teil der Zeilen einer bestimmten Farbe, beispielsweise einen Teil der ersten Zeilen 42, zu verwenden. Wird dann tatsächlich zum Erkennen des Erkennungsmerkmals die geringe Zeilenanzahl verwendet, so kann auf diese Weise die Datenverarbeitung besonders schnell und besonders einfach und somit mit besonders geringer Rechenleistung erfolgen.

**Fig. 11** zeigt eine Veranschaulichung einer Erzeugung unterschiedlicher Bilder 60, 62, 64, 70, 71 anhand von unterschiedlich bearbeiteten Daten. Dabei sind die Zeilen 42, 42', 44' und Zeilen 49, 49' im oberen Teil der Figur 11 lediglich schematisch als einzelne Blöcke dargestellt. Die darunter dargestellten Bilder 60, 62, 64, 70, 71 ergeben sich durch Weitertransport des Wertdokuments 22, mehrere Wiederholungen des durch die Zeilen 42, 42', 44' und Zeilen 49, 49' repräsentierten Beleuchtungsschemas, durch Erfassen des entsprechenden beispielsweise reflektierten Lichts und Bearbeiten der entsprechenden Daten, ähnlich wie mithilfe der Figuren 6 bis 10 dargestellt. In anderen Worten stellt das in Figur 11 gezeigte Schema stark vereinfacht das mit den mit Bezug zu den Figuren 6 bis 10 veranschaulichte grundsätzliche Schema dar, wobei zumindest teilweise andere Zeilen, Farben und/oder Auflösungen verwendet werden.

Insbesondere zeigt Figur 11, dass mittels der ersten Zeilen 42 das erste Bild 60 mit der ersten Auflösung erzeugt wird und dass mittels der in Figur 11 ganz linken ersten Zeilen 42 erste reduzierte Zeilen 42' erzeugt werden. Mittels der ersten reduzierten Zeilen 42' wird das zweite Bild 62 mit der zweiten Auflösung erzeugt. Mittels der zweiten Zeilen 44 werden zweite reduzierte Zeilen 44' erzeugt. Mittels der zweiten reduzierten Zeilen 44' wird das dritte Bild 64, allerdings mit einer reduzierten Auflösung, erzeugt. Mittels vierter Zeilen 49 werden ein fünftes Bild 70 mit einer fünften Auflösung und vierte reduzierte Zeilen 49' erzeugt. Mittels der vierten reduzierten Zeilen 49' wird ein sechstes Bild 71 mit einer sechsten Auflösung erzeugt. Bei diesem Ausführungsbeispiel ist die fünfte Auflösung kleiner als die erste Auflösung, jedoch größer als die sechste Auflösung. Außerdem ist bei diesem Ausführungsbeispiel die sechste Auflösung gleich der zweiten Auflösung und gleich der reduzierten Auflösung des dritten Bildes 64. Eine Zeile, und zwar in Figur 11 die dritte von rechts, wird nicht verwendet.

Bei diesem Ausführungsbeispiel kann die erste Auflösung beispielsweise 100 dpi x 100 dpi sein, die fünfte Auflösung kann beispielsweise 50 dpi x 50 dpi sein und die zweite und die sechste Auflösung sowie die reduzierte Auflösung des dritten Bildes 64 können beispielsweise jeweils 25 dpi x 25 dpi sein. Die native Auflösung kann beispielsweise 100 dpi x 100 dpi sein.

Die ersten Zeilen 42 und die ersten reduzierten Zeilen 42' können beispielsweise mittels roten Beleuchtungslichts erzeugt werden. Die zweiten reduzierten Zeilen 44' können beispielsweise mittels grünen Beleuchtungslichts erzeugt werden. Die vierten Zeilen 49 und die vierten reduzierten Zeilen 49' können beispielsweise mittels blauen Beleuchtungslichts erzeugt werden.

Das in Figur 11 veranschaulichte Beleuchtungs- und Bearbeitungsschema kann beispielsweise mittels einer Auflichtbeleuchtung, wie beispielsweise mit Bezug zu den Figuren 1 und 2 erläutert, realisiert werden.

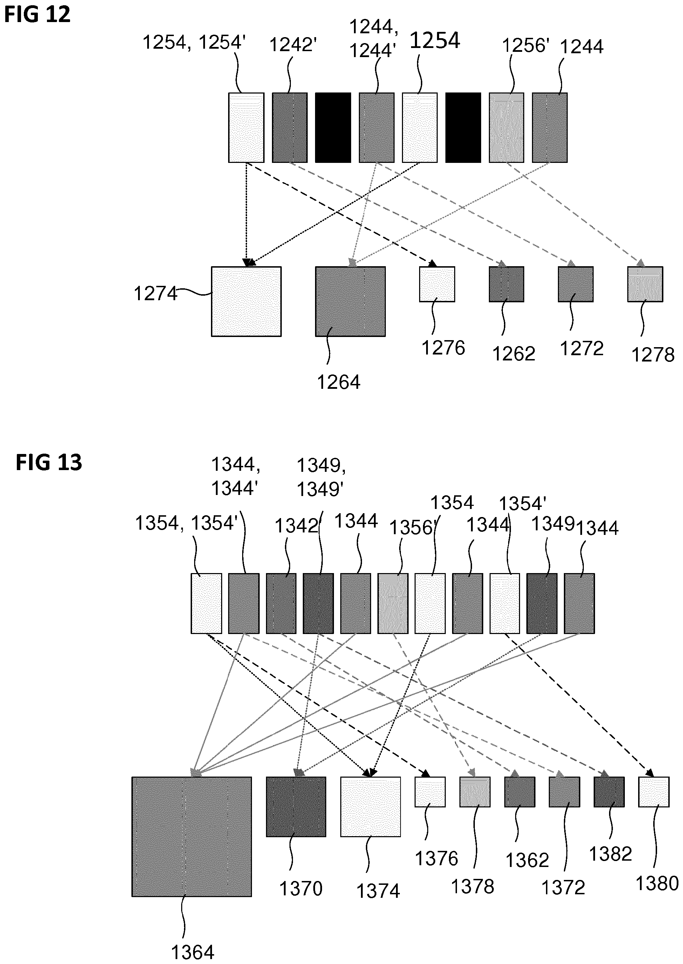

**Fig. 12** zeigt eine Veranschaulichung einer Erzeugung unterschiedlicher Bilder 1262, 1264, 1272, 1274, 1276, 1278 anhand von unterschiedlich bearbeiteten Daten. Dabei sind die Zeilen 1254, 1254', 1242', 1244, 1244', 1256' im oberen Teil der Figur 12 lediglich schematisch als einzelne Blöcke dargestellt. Die darunter dargestellten Bilder 1262, 1264, 1272, 1274, 1276, 1278 ergeben sich durch Weitertransport des Wertdokuments 22, mehrere Wiederholungen des durch die Zeilen repräsentierten Beleuchtungsschemas, durch Erfassen des entsprechenden beispielsweise transmittierten Lichts und Bearbeiten der entsprechenden Daten, ähnlich wie mithilfe der Figuren 6 bis 10 dargestellt. In anderen Worten stellt das in Figur 12 gezeigte Schema stark vereinfacht das mit den mit Bezug zu den Figuren 6 bis 10 veranschaulichte grundsätzliche Schema dar, wobei zumindest teilweise andere Zeilen, Farben und/oder Auflösungen verwendet werden.

Insbesondere zeigt Figur 12, dass mittels der ersten Zeilen 1254 das erste Bild 1274 mit einer ersten Auflösung und mittels aus den ersten Zeilen 1254 gebildeten ersten reduzierten Zeilen 1254' das zweite Bild 1276 mit einer zweiten Auflösung erzeugt wird. Ferner wird mittels aus den zweiten Zeilen 1242 gebildeten zweiten reduzierten Zeilen 1242' das dritte Bild 1262 mit einer dritten Auflösung erzeugt. Mittels der vierten Zeilen 1244 wird das vierte Bild 1264 mit einer vierten Auflösung erzeugt und mittels aus den vierten Zeilen 1244 gebildeten vierten reduzierten Zeilen 1244' wird ein fünftes Bild 1272 mit einer fünften Auflösung erzeugt. Mittels der fünften Zeilen 1254 wird das erste Bild 1274 mit der ersten Auflösung erzeugt. Mittels aus den siebten Zeilen 1256 gebildeten siebten reduzierten Zeilen 1256' wird ein sechstes Bild 1278 mit einer sechsten Auflösung erzeugt. Mittels der achten Zeilen 1244 wird das vierte Bild 1264 mit der vierten Auflösung erzeugt. Bei diesem Ausführungsbeispiel sind die zweite Auflösung, die dritte Auflösung, die fünfte Auflösung und die sechste Auflösung gleich groß. Außerdem sind die erste Auflösung und die vierte Auflösung gleich groß und größer als die anderen Auflösungen. Zwei Zeilen, und zwar in Figur 12 die dritte von links und die dritte von rechts, werden nicht verwendet.

Bei diesem Ausführungsbeispiel können die erste Auflösung und die vierte Auflösung beispielsweise 50 dpi x 50 dpi sein und die zweite Auflösung, die dritte Auflösung, die fünfte Auflösung und die sechste Auflösung können beispielsweise jeweils 25 dpi x 25 dpi sein. Die native Auflösung kann beispielsweise 50 dpi x 50 dpi sein.

Die zweiten reduzierten Zeilen 1242' können beispielsweise mittels roten Beleuchtungslichts erzeugt werden. Die vierten Zeilen 1244 und die vierten reduzierten Zeilen 1244', sowie die achten Zeilen 1244 können beispielsweise mittels grünen Beleuchtungslichts erzeugt werden. Die ersten Zeilen 1254 und die ersten reduzierten Zeilen 1254' sowie die fünften Zeilen 1254 können beispielsweise mittels gelben Beleuchtungslichts erzeugt werden. Die siebten reduzierten Zeilen 1256' können beispielsweise mittels Infrarotlichts eines ersten Wellenlängenbereichs erzeugt werden.

Das in Figur 12 veranschaulichte Beleuchtungs- und Bearbeitungsschema kann beispielsweise mittels einer Durchlichtbeleuchtung, wie beispielsweise mit Bezug den zu den Figuren 3 und 4 erläutert, realisiert werden.

**Fig. 13** zeigt eine Veranschaulichung einer Erzeugung unterschiedlicher Bilder 1362, 1364, 1370, 1372, 1374, 1376, 1378, 1380, 1382 anhand von unterschiedlich bearbeiteten Daten. Dabei sind die Zeilen 1342', 1344, 1344', 1349, 1349', 1354, 1354' und 1356' im oberen Teil der Figur 13 lediglich schematisch als einzelne Blöcke dargestellt. Die darunter dargestellten Bilder 1362, 1364, 1370, 1372, 1374, 1376, 1378, 1380, 1382 ergeben sich durch Weitertransport des Wertdokuments 22, mehrere Wiederholungen des durch die Zeilen 1342', 1344, 1344', 1349, 1349', 1354, 1354' und 1356 repräsentierten Beleuchtungsschemas, durch Erfassen des entsprechenden beispielsweise transmittierten Lichts und Bearbeiten der entsprechenden Daten, ähnlich wie mithilfe der Figuren 6 bis 10 dargestellt. In anderen Worten stellt das in Figur 13 gezeigte Schema stark vereinfacht das mit den mit Bezug zu den Figuren 6 bis 10 veranschaulichte grundsätzliche Schema dar, wobei zumindest teilweise andere Zeilen, Farben und Auflösungen verwendet werden.

Insbesondere zeigt Figur 13, dass mittels der ersten Zeilen 1354 ein erstes Bild 1374 mit einer ersten Auflösung erzeugt wird. Ferner wird mittels der aus den ersten Zeilen 1354 gebildeten ersten reduzierten Zeilen 1354' ein zweites Bild 1376 mit einer zweiten Auflösung erzeugt. Mittels der zweiten Zeilen 1344 werden ein drittes Bild 1364 mit einer dritten Auflösung und zweite reduzierte Zeilen 1344' erzeugt. Mittels der zweiten reduzierten Zeilen 1344' wird ein viertes Bild 1372 mit einer vierten Auflösung erzeugt. Mittels aus dritten Zeilen 1342 gebildeten dritten reduzierten Zeilen 1342' wird ein fünftes Bild 1362 mit einer fünften Auflösung gebildet. Mittels vierter Zeilen 1349 wird ein sechstes Bild 1370 mit einer sechsten Auflösung erzeugt. Ferner wird mittels aus den vierten Zeilen 1349 gebildeten vierten reduzierten Zeilen 1349' ein siebtes Bild 1382 mit einer siebten Auflösung gebildet. Mittels der fünften Zeilen 1344 wird das dritte Bild 1364 mit der dritten Auflösung erzeugt. Mittels der aus sechsten Zeilen 1356 gebildeten sechsten reduzierten Zeilen 1356' wird ein achtes Bild 1378 mit einer achten Auflösung erzeugt. Mittels der siebten Zeilen 1354 wird das erste Bild 1374 mit der ersten Auflösung erzeugt. Mittels der achten Zeilen 1344 wird das dritte Bild 1364 mit der dritten Auflösung erzeugt. Mittels der aus den neunten Zeilen 1354 gebildeten neunten reduzierten Zeilen 1354' wird ein neuntes Bild 1380 mit einer neunten Auflösung erzeugt. Mittels der zehnten Zeilen 1349 wird das sechste Bild 1370 mit der sechsten Auflösung erzeugt. Mittels der elften Zeilen 1344 wird das dritte Bild 1364 mit der dritten Auflösung erzeugt.

Bei diesem Ausführungsbeispiel sind die zweite Auflösung, die achte Auflösung, die fünfte Auflösung, die vierte Auflösung, die siebte Auflösung und die neunte Auflösung gleich groß. Außerdem sind die sechste Auflösung und die erste Auflösung gleich groß und größer als die anderen vorgenannten Auflösungen. Die dritte Auflösung ist die größte aller Auflösungen.

Bei diesem Ausführungsbeispiel kann die dritte Auflösung beispielsweise 100 dpi x 100 dpi sein, die sechste Auflösung und die erste Auflösung können beispielsweise 50 dpi x 50 dpi sein und die zweite Auflösung, die achte Auflösung, die fünfte Auflösung, die vierte Auflösung, die siebte Auflösung und die neunte Auflösung können beispielsweise jeweils 25 dpi x 25 dpi sein. Die native Auflösung kann beispielsweise 100 dpi x 100 dpi sein.

Das in Figur 13 veranschaulichte Beleuchtungs- und Bearbeitungsschema kann beispielsweise mittels einer Kombination einer Auflichtbeleuchtung, wie beispielsweise mit Bezug zu den Figuren 1 und 2 erläutert, und einer Durchlichtbeleuchtung, wie beispielsweise mit Bezug den zu den Figuren 3 und 4 erläutert, realisiert werden.

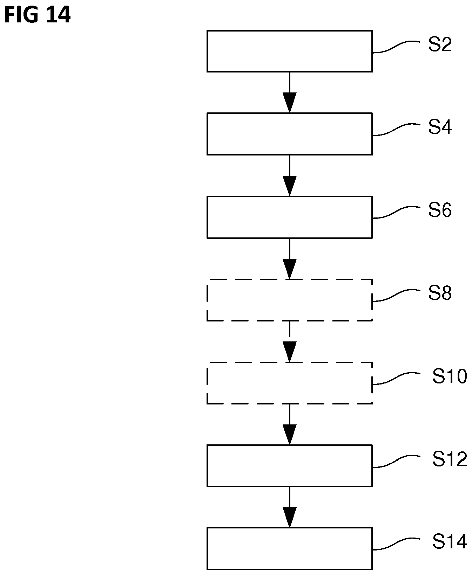

**Fig. 14** zeigt ein Ablaufdiagramm eines Ausführungsbeispiels eines Verfahrens zum Prüfen eines Wertdokuments, beispielsweise des im Vorhergehenden erläuterten Wertdokuments 22. Das Verfahren zum Prüfen des Wertdokuments 22 kann beispielsweise mithilfe einer der im Vorhergehenden erläuterten Vorrichtungen 20 zum Prüfen des Wertdokuments 22 durchgeführt werden. Zur Veranschaulichung wird das Verfahren zum Prüfen des Wertdokuments 22 neben dem in Figur 6 gezeigten Ablaufdiagramm unter Zuhilfenahme der Figuren 7 bis 13 erläutert.

In einem Schritt S2 wird das Wertdokument 22 zeilenweise derart beleuchtet, dass eine erste Gruppe von Zeilen des Wertdokuments 22 mit Licht einer ersten Wellenlänge beleuchtet wird und dass mindestens eine zweite Gruppe von Zeilen des Wertdokuments 22 mit Licht einer zweiten Wellenlänge beleuchtet wird, beispielsweise wie mit Bezug zu Figur 7 näher erläutert. Zumindest teilweise wechseln sich Zeilen der ersten Gruppe und Zeilen der zweiten Gruppe ab. Die erste Gruppe von Zeilen können beispielsweise die ersten Zeilen 42 sein. Die zweite Gruppe von Zeilen können beispielsweise die zweiten oder dritten Zeilen 44, 46 sein. Zu diesem Zweck wird das Wertdokument 22 in einer Bewegungsrichtung relativ zu der ersten und/oder zweiten Beleuchtungseinheit 24, 26, mittels derer das Wertdokument beleuchtet wird, bewegt. Dabei wird das Wertdokument 22 derart beleuchtet, dass die Zeilen senkrecht zu der Bewegungsrichtung ausgerichtet sind. Dadurch wird mit fortschreitender Bewegung nach und nach das gesamte Wertdokument 22 beleuchtet.

In einem Schritt S4 wird Reflexionslicht, das von den Zeilen reflektiert wird, und/oder Transmissionslicht, das durch die Zeilen hindurchtritt, zugeordnet zu den Zeilen der ersten Gruppe und den Zeilen der zweiten Gruppe erfasst und in ein, zwei oder mehr elektrische Signale umgewandelt, die entsprechende Daten tragen, beispielsweise wie mit Bezug zu Figur 8 näher erläutert. Dabei sind erste Daten repräsentativ für das den Zeilen der ersten Gruppe zugeordnete Reflexionslicht und/oder Transmissionslicht und zweite Daten sind repräsentativ für das den Zeilen der zweiten Gruppe zugeordnete Reflexionslicht und/oder Transmissionslicht. Die Schritte S2 und S4 können nacheinander oder gleichzeitig abgearbeitet werden.

In einem Schritt S6 werden die ersten Daten derart bearbeitet, dass ein aus den ersten Daten erzeugtes erstes Bild, beispielsweise das erste Bild 60 oder das dritte Bild 64, eine erste Auflösung hat, und die zweiten Daten werden derart bearbeitet, dass ein aus den zweiten Daten erzeugtes weiteres Bild, beispielsweise das vierte Bild 68 bzw. zweite Bild 62, eine zweite Auflösung hat, die sich von der ersten Auflösung unterscheidet, beispielsweise wie mit Bezug zu den Figuren 9 und 10 näher erläutert.

In einem optionalen Schritt S8 können die ersten Daten zusätzlich so bearbeitet werden, dass mindestens ein aus den ersten Daten erzeugtes zweites Bild, beispielsweise das zweite Bild 62, eine geringere Anzahl von Zeilen der ersten Gruppe zeigt und eine Auflösung hat, die entsprechend geringer als die erste Auflösung ist, beispielsweise wie mit Bezug zu den Figuren 10 und 11 näher erläutert.

In einem optionalen Schritt S10 können die ersten Daten zusätzlich so bearbeitet werden, dass zumindest teilweise erste Daten aufeinander folgender Zeilen der ersten Gruppe gemittelt werden und dass mindestens ein aus diesen gemittelten Daten erzeugtes zweites Bild, beispielsweise das zweite Bild 62, eine Auflösung hat, die geringer als die erste Auflösung ist. Der Schritt S10 kann alternativ oder zusätzlich zu dem Schritt S8 abgearbeitet werden.

In einem Schritt S12 wird das erste Bild 60 mit einem ersten Referenzbild verglichen und jedes weitere Bild wird mit einem entsprechenden weiteren Referenzbild verglichen. Beispielsweise wird das zweite Bild 62 mit einem entsprechenden zweiten Referenzbild verglichen.

In einem Schritt S14 wird abhängig von dem Vergleich entschieden, ob das Wertdokument 22 echt ist und/oder eine ausreichende Fitness hat, um weiter im Verkehr bleiben zu können. Dies kann beispielsweise anhand von Abweichungen zwischen den Bildern und den entsprechenden Referenzbildern und einem Vergleich dieser Abweichungen mit vorgegebenen Schwellenwerten erfolgen.

Anschaulich gesprochen werden bei dem im Vorhergehenden erläuterten Verfahren die Daten, die auch als Kameradaten bezeichnet werden können, in mehreren Belichtungsfarben in einem definierten und konfigurierbaren Zeitmultiplex erzeugt. Da unterschiedliche Algorithmen zum Prüfen der Erkennungsmerkmale unterschiedliche minimale Bildauflösungen benötigen und die Sensoreinheit 28, die auch als Kamera bezeichnet werden kann, und/oder ein Prozessor, beispielsweise eine CPU, der Vorrichtung 20 bei herkömmlichen Verfahren häufig nicht in der Lage sind, für jede benötigte Belichtungsfarbe die maximale Auflösung zu liefern bzw. zu verarbeiten, werden die Daten pro Farbe und Auflösung direkt via FPGA und DMA in einen Speicher der CPU in einen dedizierten 2D-Bildspeicherbereich pro Wertdokument 22 geschrieben.

Im FPGA können dazu folgende logische Blöcke verwendet werden: die Sensoreinheit 28 erfasst das Licht und die entsprechenden Daten der einzelnen mit spezifischer Farbe belichteten Zeilen, beispielsweise in der nativen Auflösung (100 dpi oder 200 dpi), in einem festgelegten zeitlichen Raster (Zykluslänge z.B. 12). Optional erfolgt eine Korrektur des entsprechenden Gains und/oder Offsets; mindestens ein Auflösungsreduzierer (engl.: resolution reducer) reduziert die Auflösung einzelner Zeilen um einen Faktor, beispielsweise um einen Faktor 2, 3, 4 oder mehr oder um einen nicht-ganzzahligen Faktor; und die Ausgänge speisen unterschiedliche DMA Kanäle, die dann im Speicher der CPU die Bilder unterschiedlicher Auflösung und Farbe aufbauen.

Es können mehrere parallele Auflösungsreduzierer angeordnet sein. Die Auflösungsreduzierer können einzeln pro Zeile konfiguriert werden. So kann eine Zeile einer bestimmten Farbe beispielsweise in einem Bild mit einer Auflösung von 100 dpi und in einem Bild mit einer Auflösung von 25 dpi verwendet werden. Dieser Vorgang kann auch Farbwiederverwendung (engl.: color reuse) bezeichnet werden. Dabei können beispielsweise im ersten Fall vier 100 dpi Zeilen pro Zyklus verwendet werden und im zweiten Fall kann beispielsweise nur eine dieser vier Zeilen verwendet werden und/oder auf 25 dpi reduziert werden.

Die Erfindung ist nicht auf die angegebenen Ausführungsbeispiele beschränkt. Beispielsweise können bei der Vorrichtung 20 die Beleuchtungseinheiten 24, 26 so angeordnet sein, dass sowohl eine Auflichtbeleuchtung als auch eine Durchlichtbeleuchtung möglich sind. Ferner können die Beleuchtungseinheiten mehr oder weniger als die gezeigten Lichtquellen und/oder mehr oder weniger Zeilen von Lichtquellen aufweisen. Ferner können zur Beleuchtung zusätzliche oder weniger Farben als die im Vorhergehenden erläuterten verwendet werden. Ferner können mehr oder weniger Bilder als die im Vorhergehenden erläuterten erzeugt und mit entsprechenden Referenzbildern verglichen werden. Ferner können die Bilder andere Auflösungen als die im Vorhergehenden erläuterten aufweisen. Ferner sind andere Beleuchtungsschemata als die im Vorhergehenden erläuterten möglich.

**BEZUGSZEICHENLISTE**

| | |
|---|---|
| Vorrichtung | 20 |
| Wertdokument | 22 |
| erste Beleuchtungseinheit | 24 |
| zweite Beleuchtungseinheit | 26 |
| Sensoreinheit | 28 |
| erstes Beleuchtungslicht | 30 |
| zweites Beleuchtungslicht | 32 |
| Lichtquelle | 33 |
| Reflexionslicht | 34 |
| Transmissionslicht | 35 |
| Detektor | 36 |
| optisches Element | 38 |
| Detektorzeile | 40 |
| erste Zeile | 42 |
| erste reduzierte Zeile | 42' |
| zweite Zeile | 44 |
| zweite reduzierte Zeile | 44' |
| dritte Zeile | 46 |
| dritte reduzierte Zeile | 46' |
| n-te Zeile | 48 |
| vierte Zeile | 49 |
| beleuchtete Fläche | 50 |
| Erkennungsmerkmale | 52 |
| fünfte Zeile | 54 |
| fünfte reduzierte Zeile | 54' |
| sechste Zeile | 56 |
| erstes Bild | 60 |
| zweites Bild | 62 |
| drittes Bild | 64 |
| viertes Bild | 68 |
| fünftes Bild | 70 |
| sechstes Bild | 71 |

| Figur 12 | |
|---|---|
| erste Zeile | 1254 |
| erste reduzierte Zeile | 1254' |
| zweite Zeile | 1242 |
| zweite reduzierte Zeile | 1242' |
| vierte Zeile | 1244 |
| vierte reduzierte Zeile | 1244' |
| fünfte Zeile | 1254 |
| siebte Zeile | 1256 |
| siebte reduzierte Zeile | 1256' |
| achte Zeile | 1244 |
| erstes Bild | 1274 |
| zweites Bild | 1276 |
| drittes Bild | 1262 |
| viertes Bild | 1264 |
| fünftes Bild | 1272 |
| sechstes Bild | 1278 |

| Figur 13 | |
|---|---|
| erste Zeile | 1354 |
| erste reduzierte Zeile | 1354' |
| zweite Zeile | 1344 |
| zweite reduzierte Zeilen | 1344' |
| dritte Zeile | 1342 |
| dritte reduzierte Zeile | 1342' |
| vierte Zeile | 1349 |
| vierte reduzierte Zeile | 1349' |
| fünfte Zeile | 1344 |
| sechste Zeile | 1356 |
| sechste reduzierte Zeile | 1356' |
| siebte Zeile | 1354 |
| achte Zeile | 1344 |
| neunte Zeile | 1354 |
| neunte reduzierte Zeilen | 1354' |
| zehnte Zeile | 1349 |
| elfte Zeile | 1344 |
| erstes Bild | 1374 |
| zweites Bild | 1376 |
| drittes Bild | 1364 |
| viertes Bild | 1372 |
| fünftes Bild | 1362 |
| sechstes Bild | 1370 |
| siebtes Bild | 1382 |
| achtes Bild | 1378 |
| neuntes Bild | 1380 |

## Patentansprüche

1. Verfahren zum Prüfen eines Wertdokuments (22), bei dem
das Wertdokument (22) zeilenweise derart beleuchtet wird, dass eine erste Gruppe von Zeilen (42, 46) des Wertdokuments (22) mit Licht einer ersten Wellenlänge beleuchtet wird und dass mindestens eine zweite Gruppe von Zeilen (42, 46) des Wertdokuments (22) mit Licht einer zweiten Wellenlänge beleuchtet wird, wobei sich zumindest teilweise Zeilen (42) der ersten Gruppe und Zeilen (46) der zweiten Gruppe abwechseln,
Reflexionslicht (34), das von den Zeilen (42, 46) reflektiert wird, und/oder Transmissionslicht (35), das durch die Zeilen (42, 46) hindurch tritt, zugeordnet zu den Zeilen (42) der ersten Gruppe und den Zeilen (46) der zweiten Gruppe erfasst wird, wobei erste Daten repräsentativ für das den Zeilen (42) der ersten Gruppe zugeordnete Reflexionslicht (34) und/oder Transmissionslicht (35) sind und zweite Daten repräsentativ für das den Zeilen (46) der zweiten Gruppe zugeordnete Reflexionslicht (34) und/oder Transmissionslicht (35) sind,
die ersten Daten derart bearbeitet werden, dass ein aus den ersten Daten erzeugtes erstes Bild (60) eine erste Punktdichte-Auflösung hat, und die zweiten Daten derart bearbeitet werden, dass ein aus den zweiten Daten erzeugtes weiteres Bild (68) eine zweite Punktdichte-Auflösung hat, die sich von der ersten Punktdichte-Auflösung unterscheidet,
das erste Bild (60) mit einem ersten Referenzbild verglichen wird und das weitere Bild (68) mit einem weiteren Referenzbild verglichen wird.

2. Verfahren nach Anspruch 1, bei dem
das erste Bild (60) eine erste Anzahl von Zeilen (42) der ersten Gruppe zeigt,
die ersten Daten zusätzlich so bearbeitet werden, dass mindestens ein aus den ersten Daten erzeugtes zweites Bild (62) eine geringere Anzahl von Zeilen (42) der ersten Gruppe zeigt und eine Punktdichte-Auflösung hat, die entsprechend geringer als die erste Punktdichte-Auflösung ist,
das zweite Bild (62) mit einem entsprechenden zweiten Referenzbild verglichen wird.

3. Verfahren nach Anspruch 1, bei dem
die ersten Daten zusätzlich so bearbeitet werden, dass zumindest teilweise erste Daten aufeinander folgender Zeilen (42) der ersten Gruppe gemittelt werden und dass mindestens ein aus diesen gemittelten Daten erzeugtes zweites Bild (62) eine zweite Punktdichte-Auflösung hat, die geringer als die erste Punktdichte-Auflösung ist,
das zweite Bild (62) mit einem entsprechenden zweiten Referenzbild verglichen wird.

4. Verfahren nach einem der vorstehenden Ansprüche, bei dem
das Wertdokument (22) in einer Bewegungsrichtung relativ zu einer Beleuchtungseinheit (24, 26), mittels der das Wertdokument (22) beleuchtet wird, bewegt wird und
das Wertdokument (22) derart beleuchtet wird, dass die Zeilen (42, 46) senkrecht zu der Bewegungsrichtung ausgerichtet sind.

5. Verfahren nach einem der vorstehenden Ansprüche, bei dem die erste Punktdichte-Auflösung oder die zweite Punktdichte-Auflösung einer nativen Punktdichte-Auflösung eines Detektors (36) zum Erfassen des Reflexionslichts (34) und/oder Transmissionslichts (35) entspricht.

6. Verfahren nach einem der vorhergehenden Ansprüche, bei dem das Wertdokument (22) eine Banknote, ein Scheck, ein Identitätsnachweis, ein Reisepass, ein Fahrschein oder ein Aktiendokument ist.

7. Vorrichtung (20) zur Prüfung eines Wertdokuments (22), aufweisend:
eine Beleuchtungseinheit (24, 26), welche eingerichtet ist zum zeilenweisen Beleuchten des Wertdokuments (22) derart, dass eine erste Gruppe von Zeilen (42, 46) des Wertdokuments (22) mit Licht einer ersten Wellenlänge beleuchtet wird und dass mindestens eine zweite Gruppe von Zeilen (42, 46) des Wertdokuments (22) mit Licht einer zweiten Wellenlänge beleuchtet wird, wobei sich zumindest teilweise Zeilen (42) der ersten Gruppe und Zeilen (46) der zweiten Gruppe abwechseln,
einen Detektor (36), welcher eingerichtet ist zum Erfassen von Reflexionslicht (34), das von den Zeilen (42, 46) reflektiert wird, und/oder von Transmissionslicht (35), das durch die Zeilen (42, 46) hindurch tritt, zugeordnet zu den Zeilen (42) der ersten Gruppe und den Zeilen (46) der zweiten Gruppe, wobei erste Daten repräsentativ für das den Zeilen (42) der ersten Gruppe zugeordnete Reflexionslicht (34) und/oder Transmissionslicht (35) sind und zweite Daten repräsentativ für das den Zeilen (46) der zweiten Gruppe zugeordnete Reflexionslicht (34) und/oder Transmissionslicht (35) sind,
eine Datenbearbeitungseinheit, welche eingerichtet ist zum Bearbeiten der ersten Daten derart, dass ein aus den ersten Daten erzeugtes erstes Bild (60) eine erste Punktdichte-Auflösung hat, und zum Bearbeiten der zweiten Daten derart, dass ein aus den zweiten Daten erzeugtes weiteres Bild (68) eine zweite Punktdichte-Auflösung hat, die sich von der ersten Punktdichte-Auflösung unterscheidet, und
eine Auswerteeinheit, die eingerichtet ist, das erste Bild (60) mit einem ersten Referenzbild und das weitere Bild (68) mit einem weiteren Referenzbild zu vergleichen.

8. Vorrichtung (20) nach Anspruch 7, wobei das erste Bild (60) eine erste Anzahl von Zeilen (42) der ersten Gruppe zeigt und bei der
die Datenverarbeitungseinheit eingerichtet ist, die ersten Daten zusätzlich so zu bearbeiten, dass mindestens ein aus den ersten Daten erzeugtes zweites Bild (62) eine geringere Anzahl von Zeilen (42) der ersten Gruppe zeigt und eine Punktdichte-Auflösung hat, die entsprechend geringer als die erste Punktdichte-Auflösung ist, und
die Auswerteeinheit eingerichtet ist, das zweite Bild (62) mit einem entsprechenden zweiten Referenzbild zu vergleichen.

9. Vorrichtung (20) nach Anspruch 7,
wobei die Datenverarbeitungseinheit eingerichtet ist, die ersten Daten zusätzlich so zu bearbeiten, dass zumindest teilweise erste Daten aufeinander folgender Zeilen (42) der ersten Gruppe gemittelt werden und dass mindestens ein aus diesen gemittelten Daten erzeugtes zweites Bild (62) eine Punktdichte-Auflösung hat, die geringer als die erste Punktdichte-Auflösung ist, und
wobei die Auswerteeinheit eingerichtet ist, das zweite Bild (62) mit einem entsprechenden zweiten Referenzbild zu vergleichen.

10. Vorrichtung (20) nach einem der Ansprüche 7 bis 9, aufweisend eine Transporteinheit, mittels der das Wertdokument (22) in einer Bewegungsrichtung relativ zu der Beleuchtungseinheit (24, 26) bewegt wird, wobei das Wertdokument (22) derart bewegt und beleuchtet wird, dass die Zeilen (42, 44) senkrecht zu der Bewegungsrichtung ausgerichtet sind.

11. Vorrichtung (20) nach einem der Ansprüche 7 bis 10, bei der die erste Punktdichte-Auflösung oder die zweite Punktdichte-Auflösung einer nativen Punktdichte-Auflösung des Detektors (38) zum Erfassen des Reflexionslichts (34) und/oder Transmissionslichts (35) entspricht.

12. Vorrichtung (20) nach einem der Ansprüche 7 bis 11, bei der das Wertdokument (22) eine Banknote, ein Scheck, ein Identitätsnachweis, ein Reisepass, ein Fahrschein oder ein Aktiendokument ist.

## Claims

1. Method for checking a valuable document (22), wherein
the valuable document (22) is illuminated line by line in such a way that a first group of lines (42, 46) of the valuable document (22) is illuminated with light of a first wavelength and that at least one second group of lines (42, 46) of the valuable document (22) is illuminated with light of a second wavelength, wherein lines (42) of the first group and lines (46) of the second group alternate at least in part,
reflection light (34) that is reflected by the lines (42, 46) and/or transmission light (35) that passes through the lines (42, 46) is captured in a manner assigned to the lines (42) of the first group and the lines (46) of the second group, wherein first data are representative of the reflection light (34) and/or transmission light (35) assigned to the lines (42) of the first group and second data are representative of the reflection light (34) and/or transmission light (35) assigned to the lines (46) of the second group,
the first data are processed in such a way that a first image (60) generated from the first data has a first point density resolution and the second data are processed in such a way that a further image (68) generated from the second data has a second point density resolution, which differs from the first point density resolution,
the first image (60) is compared with a first reference image and the further image (68) is compared with a further reference image.

2. Method according to Claim 1, wherein
the first image (60) shows a first number of lines (42) of the first group,
the first data are additionally processed in such a way that at least one second image (62) generated from the first data shows a smaller number of lines (42) of the first group and has a point density resolution that is correspondingly lower than the first point density resolution,
the second image (62) is compared with a corresponding second reference image.

3. Method according to Claim 1, wherein
the first data are additionally processed in such a way that first data of successive lines (42) of the first group are averaged at least in part and that at least one second image (62) generated from these averaged data has a second point density resolution lower than the first point density resolution,
the second image (62) is compared with a corresponding second reference image.

4. Method according to one of the preceding claims, wherein
the valuable document (22) is moved in a movement direction relative to an illumination unit (24, 26), by means of which the valuable document (22) is illuminated, and
the valuable document (22) is illuminated in such a way that the lines (42, 46) are aligned perpendicular to the movement direction.

5. Method according to one of the preceding claims, wherein the first point density resolution or the second point density resolution corresponds to a native point density resolution of a detector (36) for capturing the reflection light (34) and/or transmission light (35).

6. Method according to one of the preceding claims, wherein the valuable document (22) is a banknote, a cheque, an identity card, a passport, a ticket or a share document.

7. Apparatus (20) for checking a valuable document (22), having:
an illumination unit (24, 26) configured for illuminating the valuable document (22) line by line in such a way that a first group of lines (42, 46) of the valuable document (22) is illuminated with light of a first wavelength and that at least one second group of lines (42, 46) of the valuable document (22) is illuminated with light of a second wavelength, wherein lines (42) of the first group and lines (46) of the second group alternate at least in part,
a detector (36) configured for capturing reflection light (34) that is reflected by the lines (42, 46) and/or transmission light (35) that passes through the lines (42, 46) in a manner assigned to the lines (42) of the first group and the lines (46) of the second group, wherein first data are representative of the reflection light (34) and/or transmission light (35) assigned to the lines (42) of the first group and second data are representative of the reflection light (34) and/or transmission light (35) assigned to the lines (46) of the second group,
a data processing unit configured for processing the first data in such a way that a first image (60) generated from the first data has a first point density resolution and for processing the second data in such a way that a further image (68) generated from the second data has a second point density resolution, which differs from the first point density resolution, and
an evaluation unit, which is configured for comparing the first image (60) with a first reference image and the further image (68) with a further reference image.

8. Apparatus (20) according to Claim 7, wherein the first image (60) shows a first number of lines (42) of the first group, and wherein
the data processing unit is configured for additionally processing the first data such that at least one second image (62) generated from the first data shows a smaller number of lines (42) of the first group and has a point density resolution that is correspondingly lower than the first point density resolution, and
the evaluation unit is configured for comparing the second image (62) with a corresponding second reference image.

9. Apparatus (20) according to Claim 7,
wherein the data processing unit is configured for additionally processing the first data such that first data of successive lines (42) of the first group are averaged at least in part and that at least one second image (62) generated from these averaged data has a point density resolution lower than the first point density resolution, and
wherein the evaluation unit is configured for comparing the second image (62) with a corresponding second reference image.

10. Apparatus (20) according to one of Claims 7 to 9, having a transport unit, by means of which the valuable document (22) is moved in a movement direction relative to the illumination unit (24, 26), wherein the valuable document (22) is moved and illuminated in such a way that the lines (42, 44) are aligned perpendicular to the movement direction.

11. Apparatus (20) according to one of Claims 7 to 10, wherein the first point density resolution or the second point density resolution corresponds to a native point density resolution of the detector (38) for capturing the reflection light (34) and/or transmission light (35).

12. Apparatus (20) according to one of Claims 7 to 11, wherein the valuable document (22) is a banknote, a cheque, an identity card, a passport, a ticket or a share document.

## Revendications

1. Procédé de contrôle d'un document de valeur (22), procédé dans lequel
le document de valeur (22) est éclairé ligne par ligne de telle sorte qu'un premier groupe de lignes (42, 46) du document de valeur (22) soit éclairé avec une lumière d'une première longueur d'onde et qu'au moins un deuxième groupe de lignes (42, 46) du document de valeur (22) soit éclairé avec une lumière d'une deuxième longueur d'onde, au moins en partie des lignes (42) du premier groupe alternant avec des lignes (46) du deuxième groupe,
une lumière de réflexion (34), qui est réfléchie par les lignes (42, 46) et/ou une lumière de transmission (35) qui passe à travers les lignes (42, 46) est détectée comme étant associée aux lignes (42) du premier groupe et aux lignes (46) du deuxième groupe, des premières données étant représentatives de la lumière de réflexion (34) et/ou de la lumière de transmission (35) associées aux lignes (42) du premier groupe et des deuxièmes données étant représentatives de la lumière de réflexion (34) et/ou de la lumière de transmission (35) associées aux lignes (46) du deuxième groupe,
les premières données sont traitées de manière à ce qu'une première image (60) générée à partir des premières données présente une première résolution de densité de points, et les deuxièmes données sont traitées de manière à ce qu'une autre image (68) générée à partir des deuxièmes données présente une deuxième résolution de densité de points qui est différente de la première résolution de densité de points,
la première image (60) est comparée à une première image de référence et l'autre image (68) est comparée à une autre image de référence.

2. Procédé selon la revendication 1, dans lequel
la première image (60) montre un premier nombre de lignes (42) du premier groupe,
les premières données sont en outre traitées de manière à ce qu'au moins une deuxième image (62) générée à partir des premières données montre un plus petit nombre de lignes (42) du premier groupe et présente une résolution de densité de points qui est en conséquence inférieure à la première résolution de densité de points,
la deuxième image (62) est comparée à une deuxième image de référence correspondante.

3. Procédé selon la revendication 1, dans lequel
les premières données sont en outre traitées de manière à ce qu'au moins en partie des premières données de lignes successives (42) du premier groupe sont moyennées et de manière à ce qu'au moins une deuxième image (62) générée à partir de ces données moyennées présente une deuxième résolution de densité de points qui est inférieure à la première résolution de densité de points,
la deuxième image (62) est comparée à une deuxième image de référence correspondante.

4. Procédé selon l'une des revendications précédentes, dans lequel le document de valeur (22) est déplacé dans une direction de déplacement par rapport à une unité d'éclairage (24, 26) au moyen de laquelle le document de valeur (22) est éclairé, et
le document de valeur (22) est éclairé de manière à ce que les lignes (42, 46) soient orientées perpendiculairement à la direction de déplacement.

5. Procédé selon l'une des revendications précédentes, dans lequel la première résolution de densité de points ou la deuxième résolution de densité de points correspond à une résolution de densité de points d'origine d'un détecteur (36) destiné à détecter la lumière de réflexion (34) et/ou la lumière de transmission (35).

6. Procédé selon l'une des revendications précédentes, dans lequel le document de valeur (22) est un billet de banque, un chèque, une pièce d'identité, un passeport, un billet de transport ou un document d'action.

7. Dispositif (20) de contrôle d'un document de valeur (22), comprenant :
une unité d'éclairage (24, 26) qui est conçue pour éclairer le document de valeur ligne par ligne de manière à ce qu'un premier groupe de lignes (42, 46) du document de valeur (22) soit éclairé avec une lumière d'une première longueur d'onde et de manière à ce qu'au moins un deuxième groupe de lignes (42, 46) du document de valeur (22) soit éclairé avec une lumière d'une deuxième longueur d'onde, au moins en partie des lignes (42) du premier groupe alternant avec des lignes (46) du deuxième groupe,
un détecteur (36) qui est conçu pour détecter la lumière de réflexion (34) qui est réfléchie par les lignes (42, 46) et/ou la lumière de transmission (35) qui passe à travers les lignes (42, 46), lesquelles lumières sont associées aux lignes (42) du premier groupe et aux lignes (46) du deuxième groupe, les premières données étant représentatives de la lumière de réflexion (34) et/ou de la lumière de transmission (35) associées aux lignes (42) du premier groupe, et des deuxièmes données étant représentatives de la lumière de réflexion (34) et/ou de la lumière de transmission (35) associées aux lignes (46) du deuxième groupe,
une unité de traitement de données qui est conçue pour traiter les premières données de manière à ce qu'une première image (60) générée à partir des premières données présente une première résolution de densité de points, et pour traiter les deuxièmes données de manière à ce qu'une autre image (60) générée à partir des deuxièmes données (68) présente une deuxième résolution de densité de points qui est différente de la première résolution de densité de points, et
une unité d'évaluation qui est conçue pour comparer la première image (60) à une première image de référence et l'autre image (68) à une autre image de référence.

8. Dispositif (20) selon la revendication 7, dans lequel la première image (60) montre un premier nombre de lignes (42) du premier groupe et dans lequel
l'unité de traitement de données est conçue pour traiter en plus les premières données de manière à ce qu'au moins une deuxième image (62) générée à partir des premières données montre un plus petit nombre de lignes (42) du premier groupe et présente une résolution de densité de points qui est en conséquence inférieure à la première résolution de densité de points, et
l'unité d'évaluation est conçue pour comparer la deuxième image (62) à une deuxième image de référence correspondante.

9. Dispositif (20) selon la revendication 7,
l'unité de traitement de données étant conçue pour traiter en plus les premières données de manière à ce qu'au moins en partie des premières données de lignes successives (42) du premier groupe soient moyennées et de manière à ce qu'au moins une deuxième image (62) générée à partir de ces données moyennées présente une résolution de densité de points qui est inférieure à la première résolution de densité de points, et
l'unité d'évaluation étant conçue pour comparer la deuxième image (62) à une deuxième image de référence correspondante.

10. Dispositif (20) selon l'une des revendications 7 à 9, comportant une unité de transport au moyen de laquelle le document de valeur (22) est déplacé dans une direction de déplacement par rapport à l'unité d'éclairage (24, 26), le document de valeur (22) étant déplacé et éclairé de manière à ce que les lignes (42, 44) soient orientées perpendiculairement à la direction de déplacement.

11. Dispositif (20) selon l'une des revendications 7 à 10, dans lequel la première résolution de densité de points ou la deuxième résolution de densité de points correspond à une résolution de densité de points d'origine du détecteur (38) destiné à détecter la lumière de réflexion (34) et/ou la lumière de transmission (35).

12. Dispositif (20) selon l'une des revendications 7 à 11, dans lequel le document de valeur (22) est un billet de banque, un chèque, une pièce d'identité, un passeport, un billet de transport ou un document d'action.
